# EUROPEAN PATENT SPECIFICATION

(11) **EP 2 964 446 B1**
(45) Date of publication and mention of the grant of the patent: **07.12.2016**
(21) Application number: 14721800.2
(22) Date of filing: 18.04.2014
(51) Int. Cl.: B29C 49/64, B29K 67/00, B29K 105/00, B29L 31/00, B29C 35/08

(54) **HEATING SYSTEM FOR PET-PREFORMS**
HEIZSYSTEM FÜR PET-VORFORMEN
SYSTÈME DE CHAUFFAGE POUR PRÉFORMES EN PET

(30) Priority: 02.05.2013 EP 13166189
(43) Date of publication of application: 13.01.2016
(73) Proprietor: SIDEL PARTICIPATIONS S.A.S., 76930 Octeville-sur-Mer (FR)
(72) Inventor: POLLMANN-RETSCH, Jens, NL-5656 AE Eindhoven (NL); HEUSLER, Gero, NL-5656AE Eindhoven (NL)
(74) Representative: Siloret, Patrick
(86) International application number: PCT/EP2014/057992
(87) International publication number: WO 2014/177403

(56) References cited:
- EP-A1- 2 425 959
- FR-A1- 2 976 841
- US-A1- 2010 295 217
- US-A1- 2012 160 822

## Description

### FIELD OF THE INVENTION:

The invention relates to a heating system for heating PET-preforms in a bottle blowing process and a corresponding method of heating PET-preforms in a bottle blowing process.

### BACKGROUND OF THE INVENTION:

US 2012/0160822 A1 discloses a method of heating a preform characterized by a radius, a material thickness, and a material absorption spectrum, which method comprises the steps of selecting, depending on a desired temperature profile, a desired effective absorption coefficient for the preform on the basis of the preform radius and material thickness; generating a Iaser radiation beam comprising radiation with a wavelength spectrum compiled on the basis of absorption coefficients of the absorption spectrum to satisfy the effective absorption coefficient and directing the Iaser radiation beam at the preform to heat the preform.

FR 2 976 841 A1 discloses a method of heating a preform of plastic material by means of electromagnetic radiation for producing a hollow body from the forming preform.

EP 2 425 959 A1 discloses a device comprising a heating lane, which has a primary radiator that emits the electromagnetic radiation in a wavelength range with emission maximum. In addition a secondary radiator is provided, which emits the electromagnetic radiation in another wavelength range with another emission maximum. The described method provides only limited possibilities to adapt the heating process to the final form of the processed preform.

### SUMMARY OF THE INVENTION:

It's thus an object of the present invention to provide an improved heating system and a corresponding method of heating a preform during a bottle blowing process.

According to a first aspect a heating system for heating a preform having a neck, at least one sidewall and a bottom, is presented, the heating system comprises a transporting system with a holding device to hold at least one preform preferably at the neck of the preform. The transporting system is adapted to transport the preform within the heating system. The heating system further comprises a light providing arrangement. The light providing arrangement comprises at least one laser radiation generation unit for heating the sidewalls of the preform, and lighting equipment for directly heating the bottom of the preform.

The laser radiation generation unit comprises one or more lasers preferably one or more laser arrays and emits laser light essentially perpendicular to an imaginary axis of the preform extending through the holding device ( e.g. axis of a cylinder in case of cylindrical preforms). The lasers of the laser radiation generation unit may thus preferably be integrated in the sides or sidewalls of the heating systems enclosing the path of the preforms through the heating system. A preferred type of lasers is a Vertical Cavity Surface Emitting Laser (VCSEL) emitting infrared (IR) laser light. VCSEL can be produced in wafer scale processes such that high quality lasers and especially laser arrays can be provided at favorable costs. Furthermore, VCSELs do have the advantage that the IR radiation can be tuned to wavelength-regions, which are preferably absorbed only by the preform.

The laser radiation generation unit or the heating system comprises a driver for driving the laser radiation generation unit in order to generate a heating program being adapted to the bottle blowing process. Bottle means in this respect any kind of container which can be produced based on a preform. The laser radiation generation unit may comprise two, three, four or more laser arrays which can be driven independently by means of the driver. The driver may thus be adapted to drive parts of the lasers or arrays in order to enable a bottle heating and finally a bottle blowing process being adapted to the intended form of the bottle.

The lighting equipment is added in order to further adapt the heating profile to the shape of a PET preform and the intended form of the bottle. For many PET-bottle shapes, especially the bottom region of the preform has to be stretch-blown to the extreme, to allow for special customer-required stands, recesses, and the like. Therefore, the temperature of the bottom region of the preform is one of the most-critical parameters of the bottle-blowing process, making it highly desirable to have better control over the deposited energy. The lighting equipment thus provides direct heating of the bottom of a preform. The light and therefore the heat can directly be deposited at the bottom of the preform allowing defined local heating. Direct heating means that the light reaches the bottom of the preform without previously interacting with the preform (e.g. light guided or refracted by the preform). Direct heating may thus enable a heating profile provided by the lighting equipment being adapted to the intended form of the bottom of the bottle after the heating and bottle blowing process.

The light equipment is adapted to heat the bottom of the preform independently from the laser radiation generation unit. The latter can be arranged by using one or more light sources being arranged in a way that the emitted light is directed to the bottom of the preform. The emitted light may directly reach the bottom of the preform or it may be guided by means of reflecting devices as mirrors. A direct irradiation of the preform may be generated by means of a light source or light sources integrated in the holding device or being placed underneath of the bottom of the preform. An indirect irradiation of the bottom of the preform may be generated by light sources being integrated in the sides of the heating system similar to the laser radiation generation unit. The light may be emitted perpendicular to the axis of the preform and redirected to the bottom of the preform by means of one or more reflecting device such that a direct heating of the bottom of the preform with a defined heating profile is enabled. The light radiation may alternatively be inclined with respect to the laser light emitted by the lasers of the laser radiation generation unit. The angle of inclination may depend on the position of the lasers, for example, the distance to the bottom of the heating system.

The light source or sources used for the lighting device may be conventional halogen lamps or lasers or laser arrays as used for the laser radiation generation unit. While the lamp-based solution might be simpler and less costly, it carries the disadvantages that due to the broad IR-spectrum of the halogen lamps, most of the energy is deposited in the surface layers of the preforms, heating these to temperatures above the recrystallization temperature (usually above 140 °C), while the inner volumes are still below the target temperature of 120 °C. Furthermore, due to the relatively low heating efficiency of such halogen lamps, most of the IR-radiation does not serve to heat the preforms, but to increase the temperature of the complete furnace environment. However, since only a limited amount of additional energy is required at the bottom of the preform, these disadvantages might be manageable. The laser solution may provide a selective wavelength spectrum as discussed above and may have the further advantage that the laser light is directed and can be manipulated in an easy way. Laser light can thus be applied more focused in comparison to light emitted by conventional halogen lamps.

The light used to directly heat the bottom of the preform may also be emitted by means of the laser radiation generation unit. The lighting equipment comprises in this case at least one reflecting device being adapted to redirect the laser light emitted by the laser radiation generation unit to the bottom of the preform. The driver used to drive the lasers of the laser radiation generation unit controls in this case also the light used to directly heat the bottom of the preform. This may have the effect that there may be only limited control about the laser light used to heat the bottom of the preform if the laser radiation generation unit does not comprise several lasers or laser arrays which can be controlled independently. The latter may be compensated by means of a reflecting device which is adapted to the final form of the PET bottle after the bottle blowing process. The lighting unit may consist of only passive optical units as reflecting devices like mirrors in case of a laser radiation generation unit with several lasers or laser arrays which can be driven independently by means of the driver as described above.

The reflecting device may comprise at least one specular reflecting surface, diffuse reflecting surface or a combination thereof. Specular reflecting surfaces like conventional mirrors may have the advantage that, for example, laser light is reflected in a directed way. It may thus be easier to provide a defined heating profile at the bottom of the preform during the bottle blowing process.

The reflecting device may be arranged underneath the holding device such that the preform can be transported above the reflecting device. This arrangement may be used in combination with the laser radiation generation unit but may also be used if the lighting equipment comprises a light source like lasers being independent from the lasers of the laser radiation generation unit as, for example, laser(s) underneath the preforms, laser(s) combined with or integrated in the holding device and/or laser(s) integrated in the sidewall of the heating system operating independently of the laser radiation generation unit.

The reflecting device may alternatively be integrated within the holding device. The reflecting device may be in this case a specular reflecting surface and/or a diffuse reflecting surface within the preform redirecting light to the bottom of a preform. The reflecting surface may be placed on a post extending from the holding device within the preform. The reflecting surface can in this case be nearer to the surface and thus the bottom of the preform. The post holding the reflecting surface should itself be transparent or reflective, in order to minimize the radiative energy absorbed by it. The heating of the bottom may even be improved by arranging the shape of the reflecting surface in a way that the heating of the bottom of the preform is adapted to the intended shape of the bottle, especially the intended shape of the bottom of the bottle after the heating and bottle blowing process.

In the case the lighting equipment comprises at least one light source being arranged underneath of the holding device in order to directly heat the bottom of the preform it may be advantageous that the light source comprises at least a first and a second laser. The first laser is arranged to heat a first part of the bottom of the preform and the second laser is arranged to heat a second part of the bottom of the preform. Using more than one laser may have the advantage that the bottom of the preform can be heated in a more defined way. The heating system or to be more precise the driver driving the light source(s) of the lighting equipment may even be arranged to control the intensity of the laser light emitted by the first laser independently from the laser light emitted by the second laser. Lasers or laser arrays which can be controlled independently from each other may be used to define the heating profile of the bottom of the preform nearly point by point. Especially laser arrays comprising a multitude of small VCSEL which can be controlled independently may enable a laser light pattern with a high resolution. Alternatively or in addition groups of VCSEL or VCSEL arrays may be controlled in parallel such that different heating zones are enabled. A combination of VCSEL being commonly controlled and individually controlled may be advantageous if the shape of final PET-bottle comprises uniform areas (e.g. cylindrical parts of the final PET-bottle) and areas with, for example, irregular shapes. A temperature profile may be "imprinted" into the bottom of the preform, thus allowing for wider options for the design of the final PET-bottle bottom. The lasers or laser arrays may be coupled to sensor devices detecting the presence of a preform above the lasers. Especially cameras may be used to detect the position in a precise way such that the control of each laser or each sub array can be adapted to the positions of the preforms. Cameras being sensitive in the IR part of the spectrum may even be used to detect the heating profile of the bottom of the preform in order to control the lasers accordingly.

Heating systems in which the lighting equipment comprises at least one light source being integrated in the holding device may have the advantage that the bottom of the preform can be directly heated in an easy way. The relative position of the preform and the light source or light sources doesn't change. Especially light sources emitting directed light like lasers may be advantageous. A fixed heating profile can be provided which may only change over time in order to adapt the heat supply to the preform in order to enable the intendended heating profile of the preform.

The light may be provided near to the bottom of the preform by means of a post similar as discussed above in context of reflective surface. The post may be used as a light guide to guide the light to the bottom of the preform. Alternatively the light source or light sources as, for example, lasers may even be arranged at the top of the post near to the bottom of the preform in order to provide a local heat pattern at the bottom of the preform. Each laser may be controllable independently from other lasers within the light source. Alternatively or in addition the post and the light sources at the tip of the post may be dedicated for a certain type of preform and/or bottle shape. The post may thus be a replaceable part of the holding device.

According to a further aspect a method of heating a preform having a neck, at least one sidewall and a bottom is provided, the method comprises the steps of
- holding at least one preform by means of a holding device being part of a transporting system,
- transporting the preform by means of the transporting system within the heating system,
- heating the preform by means of a light providing arrangement, wherein the light providing arrangement comprises
   - at least one laser radiation generation unit for heating the sidewalls of the preform, and
   - lighting equipment for independently heating the bottom of the preform.

The method further comprises the step of controlling the laser radiation generation unit independently from the lighting equipment in order to improve the heating profile of the bottom of the preform. It may even be possible to control the lighting equipment in a way that at least a first part and a second part of the bottom of the preform are heated independently from each other which may enable a large variety of shapes of the bottom of the bottles and therefore the bottles as such.

It shall be understood that the heating system of claim 1 and the method of claim 12 have similar and/or identical embodiments, in particular, as defined in the dependent claims.

It shall be understood that a preferred embodiment of the invention can also be any combination of the dependent claims with the respective independent claim.

Further advantageous embodiments are defined below.

### BRIEF DESCRIPTION OF THE DRAWINGS:

These and other aspects of the invention will be apparent from and elucidated with reference to the embodiments described hereinafter.

The invention will now be described, by way of example, based on embodiments with reference to the accompanying drawings.

In the drawings:
Fig. 1 shows a schematic sectional view of a first embodiment of a heating system according to the present invention
Fig. 2 shows a schematic sectional view of a second embodiment of a heating system according to the present invention.
Fig. 3 shows a schematic sectional view of a third embodiment of a heating system according to the present invention
Fig. 4 shows a schematic sectional view of a fourth embodiment of a heating system according to the present invention.
Fig. 5 shows a schematic sectional view of a fifth embodiment of a heating system according to the present invention
Fig. 6 shows a schematic sectional view of a sixth embodiment of a heating system according to the present invention.
Fig. 7 shows a schematic sectional view of a seventh embodiment of a heating system according to the present invention
Fig. 8 shows a schematic sectional view of an eighth embodiment of a heating system according to the present invention.
Fig. 9 shows a schematic sectional view of a ninth embodiment of a heating system according to the present invention.

In the Figures, like numbers refer to like objects throughout. Objects in the Figures are not necessarily drawn to scale.

### DETAILED DESCRIPTION OF EMBODIMENTS:

Various embodiments of the invention will now be described by means of the Figures.

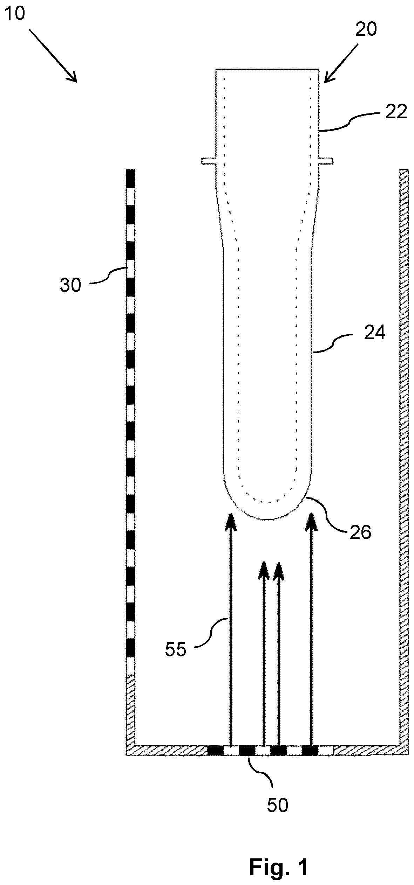

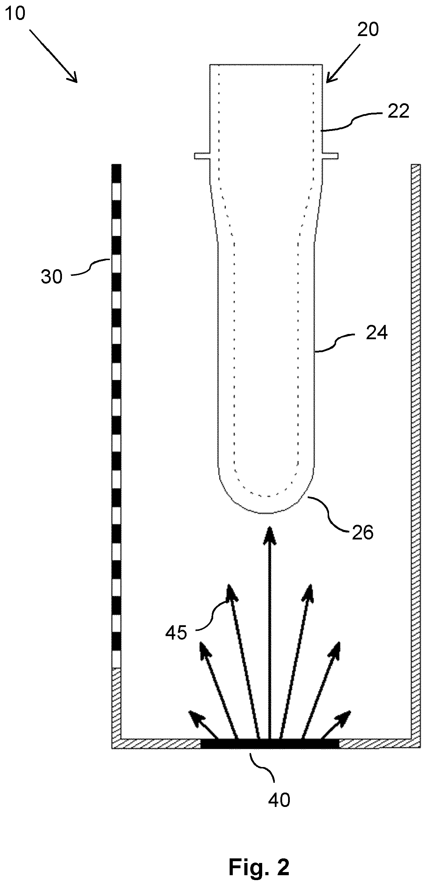

Figs. 1 and 2 depict schematic sectional views of a first and a second embodiment of a heating system 10 according to the present invention. The heating system 10 for heating a preform 20 comprises a laser radiation generation unit 30 for heating the sidewall of the preform 24. The preform is hold by means of a holding device (not shown). Two possible approaches are conceivable for directly heating the bottom of the preform, either a conventional halogen lamp 40 providing non laser light 45 depicted in Fig. 2 or some type of high-power laser array 50, like the VCSEL-arrays providing laser light 55 employed in the rest of the furnace or heating system 10 as depicted in Fig. 1. While the lamp-based solution might be simpler and less costly, it carries with it all the disadvantages as discussed above. However, since only a limited amount of additional energy is required, these disadvantages like minor efficiency and unintended heating of the environment and thus the heating system 10 might be acceptable in view of costs.

The laser-solution on the other hand offers a number of additional options. With a segmented heat source, it is possible to only switch on those lasers that are actually underneath the preform 20 (thus making the setup adaptable to varying preform widths). Furthermore, even a temperature profile may be "imprinted" into the bottom 26 of the preform 20, by selecting different operating powers for the different laser segments, thus allowing for wider options for the design of the final PET-bottle bottom. Finally, employing better-controllable lasers (instead of halogen lamps) will help in avoiding an overheating of the preform thread (that in the depicted furnace design lies at neck of the preform 22).

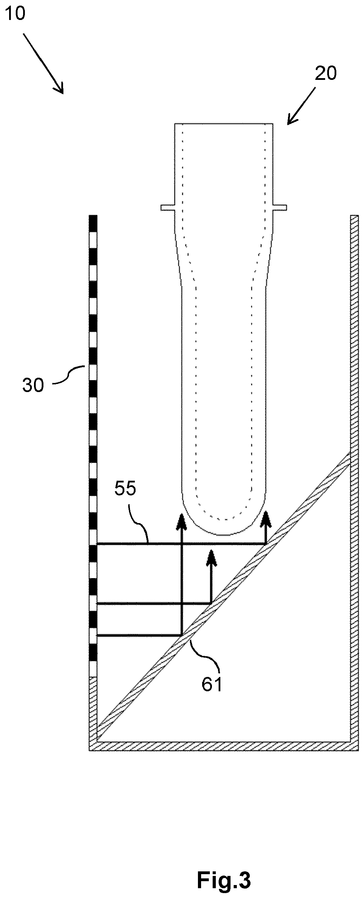

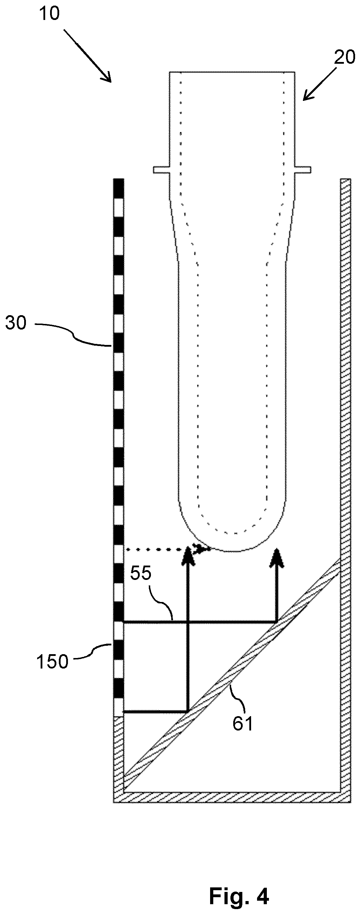

Figs. 3 and 4 show schematic sectional views of a third and a fourth embodiment of a heating system according to the present invention.

If no additional heat sources shall be employed, in many cases it will be possible to make use of the existing high-power VCSEL-arrays of the laser radiation generation unit 30 to directly heat the bottom 26 of the preform 20. Typically, a bottle blowing furnace and thus the heating system 10 will have a laser module installed that has a larger height than necessary for most of the used preforms 20. In this way, the furnace has the flexibility to heat a wide range of preform heights. Thus, if a preform 20 shorter than the maximum module length is heated, the remaining lower laser zones can be employed to directly heat the preform bottom.

This most conveniently can be achieved by a reflecting device as a flat redirecting mirror 61. This mirror 61 should be arranged at an angle close to 45° to the walls of the furnace. By proper selection of the additional laser zones to be operated, the exact width of the preform bottom can be irradiated, without further energy loss to free space. In Fig. 3 all lasers or laser arrays of the laser radiation generation unit 30 are used for heating the preform 20. Depending on the geometry of the arrangement (distances between lasers, distance to preform 20, and width of the furnace or of the heating system 10), it may even be possible that some zones are switched off (= "gap") between the zones that irradiate the preform directly and the zones that irradiate the bottom 26 of the preform 20 via the mirror 61 as depicted in Fig. 4. The lasers between lasers irradiating the right side of the bottom 26 of the preform 20 depicted by the middle arrow of Fig. 4 and the upper dotted arrow of Fig. 4 are switched off. In an improvement of this arrangement, the actual number and positions of the additional laser zones to be switched on could be determined automatically, from the known dimensions of the heating device 10 and the user-supplied geometry of the preform 20. As an example, the size of the gap and even the power-level settings for the additional zones for heating the bottom 26 of the preform 20 relative to the power-level settings of the zones that directly irradiate the sidewall of the preform 24 could be calculated by a control unit of the heating system 10 comprising the driver of the laser radiation generation unit 30.

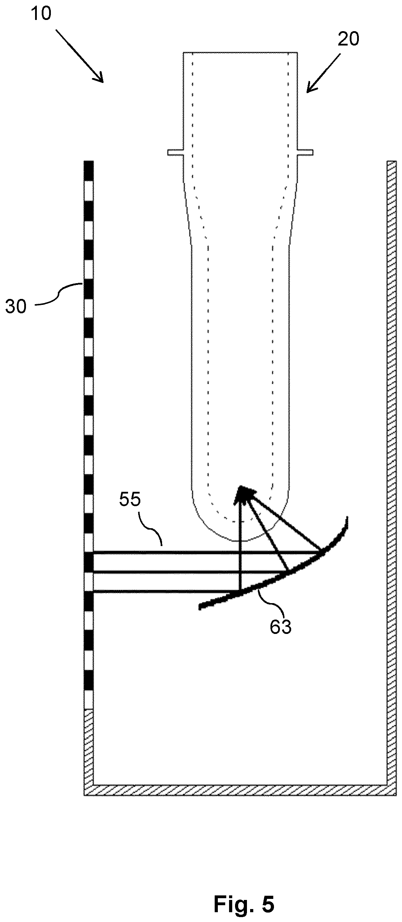

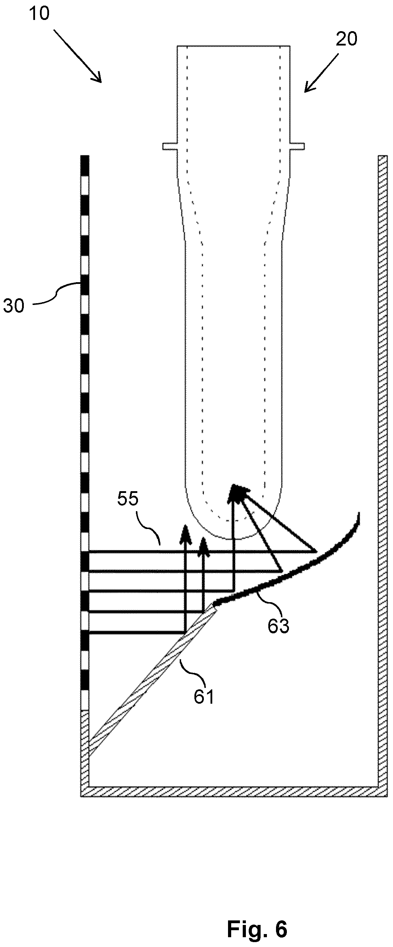

Figs. 5 and 6 show schematic sectional views of a fifth and a sixth embodiment of a heating system according to the present invention.

As a variant of the concept shown in Figs. 3 and 4, also a parabolic mirror 63 may be employed. Such an arrangement would focus the laser light 55 from the additional zones, e.g. onto the center of the half-spherical bottom 26 of the preform 20. In this way, less inhomogeneities due to refraction in the bottom 26 of the preform 20 can be expected. A minor disadvantage of this concept may be that only half of the bottom 26 of the preform 20 can be irradiated this way. However, since the preforms 20 are constantly rotated around their long axis during their way through the heating system 10, this disadvantage should vanish over the course of the full heating process. In another embodiment shown in Fig. 6, the parabolic mirror 63 (for the part of the preform 20 farther away from the irradiating laser unit 30) could be combined with a flat mirror 61 for the preform part closer to the lasers of the laser radiation generation unit 30, to further mitigate this disadvantage in comparison to the arrangement shown in Fig. 5. Such an arrangement would offer some more control options to realize the desired temperature profile in the bottom 26 of the preform 20 by balancing how much radiation is focused and how much radiation is delivered along the long axis of the preform 20.

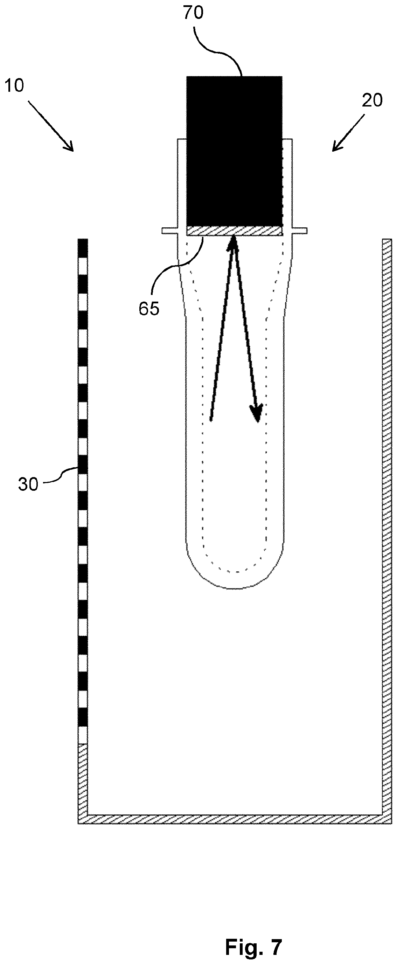

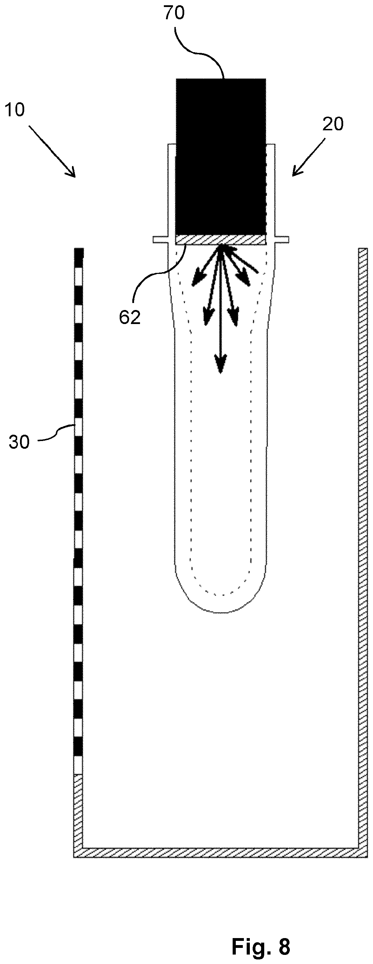

Fig. 7 and 8 show schematic sectional views of a seventh and an eighth embodiment of a heating system 10 according to the present invention.

Each preform 20 is held by a holding device 70 on its way through the heating system 10. This holding device 70 typically consists of metal with some inlaid o-rings, to provide good grip for the preform 20. Via this holding device 70, also the rotation of the preform is realized. The bottom surface of the holding device is close to the plane of the neck of the preform 22. When this bottom surface of the holding device 70 is equipped with a reflective coating, more of the radiation in the furnace cavity will be reflected back towards the prefoim 20 and especially the bottom 26 of the preform 20 (instead of being absorbed by the holding device 70, which nowadays needs an additional cooling to prevent overheating).

In general, such a reflective coating could come in two types. A reflective coating providing a specular reflecting area 65 as shown in Fig. 7 will reflect radiation according to the simple law of reflection (incoming angle equals outgoing angle). Such a coating would be especially useful in combination with the measures described in Fig. 1 ,Fig. 3 and Fig. 4, which more or less would direct radiation under shallow angles towards the bottom 26 of the preform 20. But also for radiation coming under more steep angles, such a mirror would improve the overall efficiency of the heating system 10.

Another type of reflective coating would provide a diffuse reflecting area 62 as depicted in Fig. 8. Mostly, such coatings have a smaller total degree of reflection. However, in special cases (e.g. for a Lambertian diffuse reflector), the diffusively reflected radiation has a preferred direction, which is perpendicular to the reflecting surface. Thus, while such a reflective coating will not reflect all radiation coming from the region of the bottom 26 of the preform 20 back towards the bottom 26 of the preform 20, it will also redirect a significant portion of radiation coming from other parts of the heating system 10. In total, this may still increase the deposited energy in the bottom 26 of the preform 20, compared to the case of a specular reflector that can only make use of radiation already coming from the right direction.

Both alternatives shown in Figs. 7 and 8 may also be used in combination with a post extending from the holding device 70 to the bottom 26 of the preform 20. The tip of the post next to the bottom 26 of the preform 20 may comprise the diffuse reflecting area 62 and/or a specular reflecting area 65 reflecting light to the bottom 26 of the preform 20. A post may enable a more efficient use of radiation because a major part of the radiation being reflected by the reflecting area 62, 65 may be redirected to the bottom 26 of the preform 20. Furthermore, the shape of the reflecting area 62, 65 may be adapted to the intended shape of the bottom in order to provide a predefined heating pattern at the bottom 26 of the preform 20. It may be advantageous that the post or the holding device 70 may be exchangeable (e.g. a post with a screw thread) in order to provide different heating profiles depending on the intended form of the bottle. To avoid excessive absorption of energy by the post itself (in the space between the reflecting area 62, 65 and the holding device 70), the post could be coated with a reflective coating or be made from material that is transparent to the laser radiation.

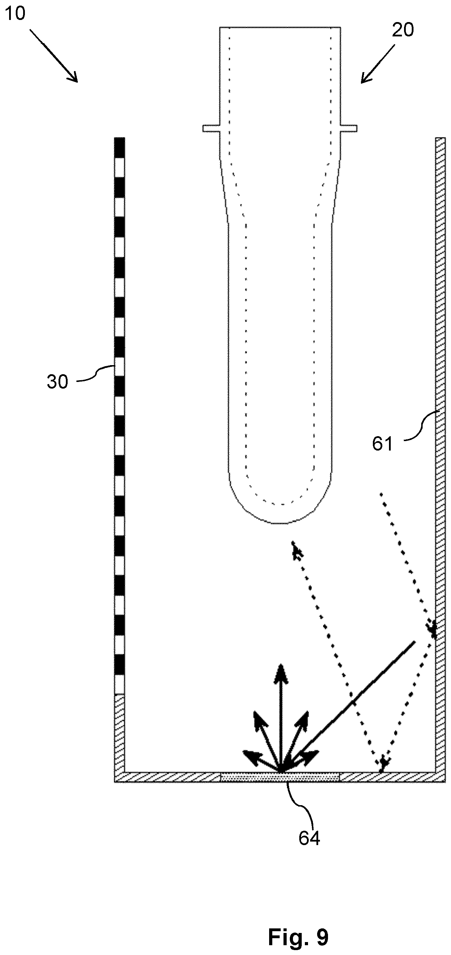

The idea of a diffuse reflective coating could also be applied to a bottom mirror of the heating system 10. Using the same arguments as above, this also could increase the amount of energy deposited in the bottom 26 of the preform 20. To avoid energy losses in the regions without preform 20, the bottom mirror could even be a combination of specular mirror (below regions without preform 20) and diffuse reflecting mirrors 64 (below the preforms 20) as shown in Fig. 9. This way, stray radiation in e.g. the corners of the heating systems would be redirected into the main volume, while radiation that hits the bottoms below the preforms 20 would predominantly be redirected directly towards the bottoms 26 of the preforms 20 in order to provide an improved heating profile.

Of course, in a practical heating system 10, several of these means could be combined. The combination of a specular coating in the holding device 70 and additional sources or mirrors has already been mentioned. But also a combination of an additional heat source at the bottom for some length of the heating system (e.g., half of the furnace, if this source length is sufficient) and a diffuse reflecting mirror 64 at the bottom of the heating system for the rest of the furnace seems feasible. This way, the additional cost for another heat source is limited, while at the same time the effect for heating the bottom 26 of the preform 20 could be maximized. Another combination could be a diffuse reflecting mirror 64 that is shaped conformably to the bottom 26 of the preform 20 (e.g. a half-sphere centered around the bottom half-sphere of the preform), that thus would preferably reflect all radiation towards the bottom of the preform. Also combinations of light sources like lasers integrated in the holding device 70 and the reflecting device underneath of the preforms 20 may be used to optimize the heating profile. The shape of the reflecting device may in this case be adapted to the position of the lasers within the preform 20. Other combinations of the presented ideas are equally feasible.

While the invention has been illustrated and described in detail in the drawings and the foregoing description, such illustration and description are to be considered illustrative or exemplary and not restrictive.

From reading the present disclosure, other modifications will be apparent to persons skilled in the art. Such modifications may involve other features which are already known in the art and which may be used instead of or in addition to features already described herein.

Variations to the disclosed embodiments can be understood and effected by those skilled in the art, from a study of the drawings, the disclosure and the appended claims. In the claims, the word "comprising" does not exclude other elements or steps, and the indefinite article "a" or "an" does not exclude a plurality of elements or steps. The mere fact that certain measures are recited in mutually different dependent claims does not indicate that a combination of these measures cannot be used to advantage.

Any reference signs in the claims should not be construed as limiting the scope thereof.

### List of reference numerals:

- 10: heating system
- 20: preform
- 22: neck of the preform
- 24: sidewall of the preform
- 26: bottom of the preform
- 30: laser radiation generation unit
- 40: halogen lamp
- 45: non laser light
- 50: laser array
- 55: laser light
- 61: mirror
- 62: diffuse reflecting area
- 63: parabolic mirror
- 64: diffuse reflecting mirror
- 65: specular reflecting area
- 70: holding device
- 150: laser array integrated in the side of the heating system

## Claims

1. A heating system (10) for heating a preform (20) having a neck (22), at least one sidewall (24) and a bottom (26), the heating system (10) comprising
- a transporting system comprising a holding device (70) for holding at least one preform (20), the transporting system being adapted to transport the preform (20) within the heating system (10), and
- a light providing arrangement, the light providing arrangement comprising
- at least one laser radiation generation unit (30) for heating the sidewalls of the preform (24), and
- lighting equipment for directly heating the bottom (26) of the preform (20), wherein the lighting equipment is adapted to heat the bottom (26) of the preform (20) independently from the laser radiation generation unit (30).

2. The heating system (10) according to claim 1, wherein the lighting equipment comprises at least one retlecting device (61, 62, 63, 64, 65) being adapted to redirect laser light (55) emitted by the laser radiation generation unit (30) and/or the lighting equipment.

3. The heating system (10) according to claim 2, wherein the reflecting device (61, 63, 64) is arranged underneath of the holding device (70) such that the preform (20) can be transported above the reflecting device.

4. The heating system (10) according to claim 2, wherein the retlecting device (62, 65) is part of the holding device (70).

5. The heating system (10) according to claim 2, wherein the reflecting device comprises at least one specular reflecting area (61, 63, 65) and/or at least one diffuse reflecting area (62, 64).

6. The heating system (10) according to claim 2, wherein the reflecting device (63) is adapted to the intended shape of a container produced from the preform (20).

7. The heating system (10) according to claim 1, wherein the lighting equipment comprises at least one light source (40, 50) being arranged underneath of the holding device (70), the light source (40, 50) being arranged to directly heat the bottom (26) of the preform (20).

8. The heating system (10) according to claim 7, wherein the light source comprises a bottom laser radiation generation unit (50) comprising at least a first and a second laser, wherein the first laser is arranged to heat a first part of the bottom (26) of the preform (20) and the second laser is arranged to heat a second part of the bottom (26) of the preform (20).

9. The heating system (10) according to claim 8, wherein the heating system (10) is arranged to control the intensity of the laser light (55) emitted by the first laser independently from the laser light (55) emitted by the second laser.

10. The heating system (10) according to claim 1, wherein the lighting equipment comprises at least one light source being coupled to the holding device (70), the light source being arranged to directly heat the bottom (26) of the preform (20).

11. The heating system (10) according to claim 10 comprising a post extending from the holding device (70), the post being adapted to provide a local light distribution of the light emitted by the light source to the preform (20).

12. A method of heating a preform (20) having a neck (22), at least one sidewall (24) and a bottom (26), the method comprises the steps of
- holding at least one preform (20) by means of a holding device (70) being part of a transporting system,
- transporting the preform (20) by means of the transporting system within the heating system (10),
- heating the preform (20) by means of a light providing arrangement, wherein the light providing arrangement comprises
- at least one laser radiation generation unit (30) for heating the sidewalls (24) of the preform (20),
- lighting equipment for heating the bottom (26) of the preform (20), and
- controlling the laser radiation generation unit (30) independently from the lighting equipment.

13. The method according to claim 12 comprising the step of
- controlling the lighting equipment in such a way that at least a first part and a second part of the bottom (26) of the preform (20) are heated independently.

## Patentansprüche

1. Heizsystem (10) zum Erwärmen einer Vorform (20) mit einem Ansatz (22), mindestens einer Seitenwand (24) und einem Boden (26), wobei das Heizsystem (10) umfasst
- ein Transportsystem, das eine Haltevorrichtung (70) zum Halten mindestens einer Vorform (20) umfasst, wobei das Transportsystem so ausgelegt ist, dass es die Vorform (20) innerhalb des Heizsystems (10) transportiert, und
- eine Lichtbereitstellungsanordnung, wobei die Lichtbereitstellungsanordnung umfasst
- mindestens eine Laserstrahlungs-Erzeugungseinheit (30) zum Erwärmen der Seitenwände der Vorform (24), und
- eine Beleuchtungseinrichtung zum direkten Erwärmen des Bodens (26) der Vorform (20), wobei die Beleuchtungseinrichtung so ausgelegt ist, dass sie den Boden (26) der Vorform (20) unabhängig von der Laserstrahlungs-Erzeugungseinheit (30) erwärmt.

2. Heizsystem (10) nach Anspruch 1, wobei die Beleuchtungseinrichtung mindestens eine reflektierende Vorrichtung (61, 62, 63, 64, 65) umfasst, die so ausgelegt ist, dass sie Laserlicht (55), das von der Laserstrahlungs-Erzeugungseinheit (30) und/oder der Beleuchtungseinrichtung emittiert wird, umlenkt.

3. Heizsystem (10) nach Anspruch 2, wobei die reflektierende Vorrichtung (61, 63, 64) unterhalb der Haltevorrichtung (70) angeordnet ist, so dass die Vorform (20) oberhalb der reflektierenden Vorrichtung transportiert werden kann.

4. Heizsystem (10) nach Anspruch 2, wobei die reflektierende Vorrichtung (62, 65) Teil der Haltevorrichtung (70) ist.

5. Heizsystem (10) nach Anspruch 2, wobei die reflektierende Vorrichtung mindestens einen spiegelnden reflektierenden Bereich (61, 63, 65) und/oder mindestens einen diffusen reflektierenden Bereich (62, 64) umfasst.

6. Heizvorrichtung (10) nach Anspruch 2, wobei die reflektierende Vorrichtung (63) an die vorgesehene Form eines Behälters, der aus der Vorform (20) produziert wird, angepasst ist.

7. Heizsystem (10) nach Anspruch 1, wobei die Beleuchtungseinrichtung mindestens eine Lichtquelle (40, 50) umfasst, die unterhalb der Haltevorrichtung (70) angeordnet ist, wobei die Lichtquelle (40, 50) so angeordnet ist, dass sie den Boden (26) der Vorform (20) direkt erwärmt.

8. Heizsystem (10) nach Anspruch 7, wobei die Lichtquelle eine untere Laserstrahlungs-Erzeugungseinheit (50) umfasst, die mindestens einen ersten und einen zweiten Laser umfasst, wobei der erste Laser so angeordnet ist, dass er einen ersten Teil des Bodens (26) der Vorform (20) erwärmt, und der zweite Laser so angeordnet ist, dass er einen zweiten Teil des Bodens (26) der Vorform (20) erwärmt.

9. Heizsystem (10) nach Anspruch 8, wobei das Heizsystem (10) so angeordnet ist, dass es die Intensität des Laserlichts (55), das von dem ersten Laser emittiert wird, unabhängig von dem Laserlicht (55), das von dem zweiten Laser emittiert wird, steuert.

10. Heizsystem (10) nach Anspruch 1, wobei die Beleuchtungseinrichtung mindestens eine Lichtquelle umfasst, die mit der Haltevorrichtung (70) gekoppelt ist, wobei die Lichtquelle so angeordnet ist, dass sie den Boden (26) der Vorform (20) direkt erwärmt.

11. Heizsystem (10) nach Anspruch 10, das einen Stab umfasst, der sich von der Haltevorrichtung (70) erstreckt, wobei der Stab so ausgelegt ist, dass er eine lokale Lichtverteilung des Lichts bewirkt, das von der Lichtquelle zu der Vorform (20) emittiert wird.

12. Verfahren zum Erwärmen einer Vorform (20), die einen Ansatz (22), mindestens eine Seitenwand (24) und einen Boden (26) aufweist, wobei das Verfahren die folgenden Schritte umfasst
- Halten mindestens einer Vorform (20) mittels einer Haltevorrichtung (70), die Teil eines Transportsystems ist,
- Transportieren der Vorform (20) mittels des Transportsystems innerhalb des Heizsystems (10),
- Erwärmen der Vorform (20) mittels einer Lichtbereitstellungsanordnung, wobei die Lichtbereitstellungsanordnung umfasst
- mindestens eine Laserstrahlungs-Erzeugungseinheit (30) zum Erwärmen der Seitenwände (24) der Vorform (20),
- eine Beleuchtungseinrichtung zum Erwärmen des Bodens (26) der Vorform (20), und
- Steuern der Laserstrahlungs-Erzeugungseinheit (30) unabhängig von der Beleuchtungseinrichtung.

13. Verfahren nach Anspruch 12, das den folgenden Schritt umfasst
- Steuern der Beleuchtungseinrichtung so, dass mindestens ein erster Teil und ein zweiter Teil des Bodens (26) der Vorform (20) unabhängig voneinander erwärmt werden.

## Revendications

1. Système de chauffage (10) servant à chauffer une préforme (20) ayant un col (22), au moins une paroi latérale (24) et un fond (26), le système de chauffage (10) comprenant
- un système de transport comprenant un dispositif de maintien (70) servant à maintenir au moins une préforme (20), le système de transport étant adapté pour transporter la préforme (20) à l'intérieur du système de chauffage (10), et
- un agencement fournissant de la lumière, l'agencement fournissant de la lumière comprenant
- au moins une unité de production de rayonnement laser (30) servant à chauffer les parois latérales de la préforme (24), et
- un équipement d'éclairage servant à chauffer directement le fond (26) de la préforme (20), l'équipement d'éclairage étant adapté pour chauffer le fond (26) de la préforme (20) indépendamment de l'unité de production de rayonnement laser (30).

2. Système de chauffage (10) selon la revendication 1, dans lequel l'équipement d'éclairage comprend au moins un dispositif réfléchissant (61, 62, 63, 64, 65) adapté pour rediriger la lumière laser (55) émise par l'unité de production de rayonnement laser (30) et/ou l'équipement d'éclairage.

3. Système de chauffage (10) selon la revendication 2, dans lequel le dispositif réfléchissant (61, 63, 64) est disposé au-dessous du dispositif de maintien (70) de telle sorte que la préforme (20) peut être transportée au-dessus du dispositif réfléchissant.

4. Système de chauffage (10) selon la revendication 2, dans lequel le dispositif réfléchissant (62, 65) fait partie du dispositif de maintien (70).

5. Système de chauffage (10) selon la revendication 2, dans lequel le dispositif réfléchissant comprend au moins une zone de réflexion spéculaire (61, 63, 65) et/ou au moins une zone de réflexion diffuse (62, 64).

6. Système de chauffage (10) selon la revendication 2, dans lequel le dispositif réfléchissant (63) est adapté à la forme prévue d'un récipient produit à partir de la préforme (20).

7. Système de chauffage (10) selon la revendication 1, dans lequel l'équipement d'éclairage comprend au moins une source de lumière (40, 50) disposée au-dessous du dispositif de maintien (70), la source de lumière (40, 50) étant agencée pour chauffer directement le fond (26) de la préforme (20).

8. Système de chauffage (10) selon la revendication 7, dans lequel la source de lumière comprend une unité de production de rayonnement laser inférieure (50) comprenant au moins un premier et un deuxième laser, le premier laser étant agencé pour chauffer une première partie du fond (26) de la préforme (20) et le deuxième laser étant agencé pour chauffer une deuxième partie du fond (26) de la préforme (20).

9. Système de chauffage (10) selon la revendication 8, le système de chauffage (10) étant agencé pour contrôler l'intensité de la lumière laser (55) émise par le premier laser indépendamment de la lumière laser (55) émise par le deuxième laser.

10. Système de chauffage (10) selon la revendication 1, dans lequel l'équipement d'éclairage comprend au moins une source de lumière couplée au dispositif de maintien (70), la source de lumière étant agencée pour chauffer directement le fond (26) de la préforme (20).

11. Système de chauffage (10) selon la revendication 10 comprenant un montant s'étendant depuis le dispositif de maintien (70), le montant étant adapté pour fournir une distribution lumineuse locale de la lumière émise par la source de lumière vers la préforme (20).

12. Procédé de chauffage d'une préforme (20) ayant un col (22), au moins une paroi latérale (24) et un fond (26), le procédé comprenant les étapes consistant à
- maintenir au moins une préforme (20) au moyen d'un dispositif de maintien (70) faisant partie d'un système de transport,
- transporter la préforme (20) au moyen du système de transport à l'intérieur du système de chauffage (10),
- chauffer la préforme (20) au moyen d'un agencement fournissant de la lumière, l'agencement fournissant de la lumière comprenant
- au moins une unité de production de rayonnement laser (30) servant à chauffer les parois latérales (24) de la préforme (20),
- un équipement d'éclairage servant à chauffer le fond (26) de la préforme (20), et
- contrôler l'unité de production de rayonnement laser (30) indépendamment de l'équipement d'éclairage.

13. Procédé selon la revendication 12 comprenant l'étape consistant à
- contrôler l'équipement d'éclairage de telle sorte qu'au moins une première partie et une deuxième partie du fond (26) de la préforme (20) soient chauffées indépendamment.
